**Europäisches Patentamt**

**European Patent Office**

**Office européen des brevets**

(19)

(11) Veröffentlichungsnummer: **0 103 688**
**B1**

(12) # EUROPÄISCHE PATENTSCHRIFT

(45) Veröffentlichungstag der Patentschrift:
**18.03.87**

(51) Int. Cl.⁴: **C 10 L 5/40, F 21 L 17/00**

(21) Anmeldenummer: **83106699.8**

(22) Anmeldetag: **06.07.83**

(54) **Kaminholz-Ersatzprodukte und Verfahren zu deren Herstellung.**

(30) Priorität: **21.07.82 DE 3227148**
**13.11.82 DE 3242064**

(43) Veröffentlichungstag der Anmeldung:
**28.03.84 Patentblatt 84/13**

(45) Bekanntmachung des Hinweises auf die Patenterteilung:
**18.03.87 Patentblatt 87/12**

(84) Benannte Vertragsstaaten.
**AT BE CH DE FR GB IT LI LU NL**

(56) Entgegenhaltungen:
**CH-A-214 570**
**FR-A-2 358 460**
**GB-A-184 549**

(73) Patentinhaber: **A N A S C O GmbH, Aarstrasse 1,**
**D-6200 Wiesbaden (DE)**

(72) Erfinder: **Kretzschmann, Günther, Berliner Strasse**
**17, D-6531 Münster Sarmsheim (DE)**

(74) Vertreter: **Laudien, Dieter, Boehringer Ingelheim**
**International GmbH ZA Patente Postfach 200,**
**D-6507 Ingelheim am Rhein- (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

## Beschreibung

Die Erfindung betrifft ein neues Verfahren zur Herstellung eines Ersatzproduktes für Kaminholz.

Es ist bekannt, daß die Verwendung echten Kaminholzes für offene Kamine eine Reihe von Nachteilen mit sich bringt. Holz ist z.B. in den heutigen Stadtwohnungen schlecht zu lagern. Zudem wird das Holz oft noch feucht angeliefert und muß zum Trocknen gestapelt werden. Außerdem ist Holz weltweit knapp und deshalb teuer.

Wegen dieser Nachteile sind bereits Kaminholz-Ersatzprodukte entwickelt und angeboten worden. Es handelt sich dabei einerseits um stranggepreßte Holzabfälle (z.B. Hobelspäne), andererseits um walzenförmige Preßlinge aus einem Gemisch von Paraffin und Sägemehl. Während das erstgenannte Produkt wegen seiner kompakten Beschaffenheit sowohl bezüglich seiner Entzündung als auch seiner Flammentwicklung nur sehr schlechte Brenneigenschaften hat, brennt das zweitgenannten Produkt zwar besser, kommt aber echten Kaminholzscheiten weder im Aussehen noch in den Brenneigenschaften nahe.

Aus der CH-PS 214 570 ist ein Kaminholzersatzprodukt bekannt geworden, in welchem als brennbare Masse gepreßte Holzabfälle in einen hülsenförmigen Körper gefüllt und an dessen Außenseite Zündleisten zur Entflammung des Kaminholzersatzproduktes angebracht sind.

Der Erfindung liegt die Aufgabe zugrunde, ein Kaminholzersatzprodukt zu schaffen, welches sowohl im Aussehen wie in seinen Brenneigenschaften dem Kaminholz möglichst nahe kommt. Das produkt soll überdies einfach und billig herzustellen sowie gut zu lagern sein.

Diese Aufgabe wird dadurch gelöst, daß man einem Hüllkörper (Hülse) aus schwer brennbarem Material die Form und Farbe von Scheit- oder Rundholz verleiht und ihn mit einer oder mehreren vorgefertigten Unterbrechungen versieht, welche als Soll-Zünd- bzw. Brennstelle fungieren. Dies kann z.B. so geschehen, daß man ihn mit einigen bzw. zahlreichen über die gesamte Hülsenoberfläche regelmäßig oder auch regellos verteilten Löcher von etwa 10 bis 20 mm Durchmesser (beispielsweise im Abstand von ca. 30 bis 80 mm) versieht und schließlich den Hüllkörper mit dem eigentlichen Brennmaterial befüllt. Letzteres kann etwa durch Eingießen oder Einpressen geschehen.

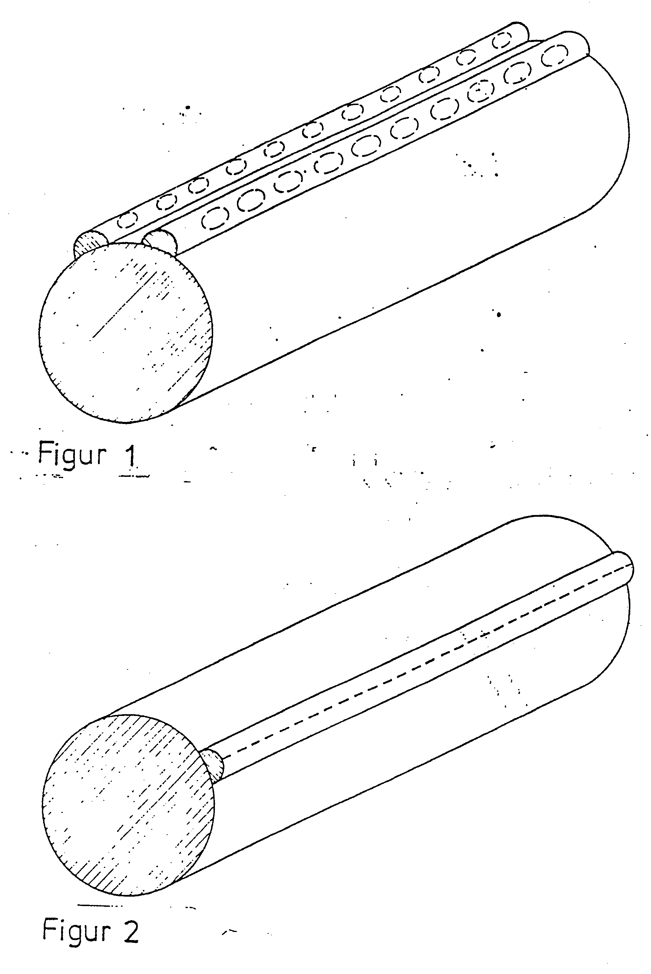

Eine weitere Möglichkeit ist es, den eine brennbare Füllung umschließenden Hüllkörper an seiner Außenseite mit einer oder mehreren sich in Längsrichtung erstreckenden Anzündleisten bzw. -wülsten zu versehen: So kann man den Hüllkörper mit einer oder mehreren Reihen von Löchern versehen und ihn dann mit dem polymerisierbaren flüssigen (zwecks späterer Erstarrung mit einer Härtersubstanz versehenen) brennbaren Füllmaterial befüllen. Es wird ein geringer Überschuß eingesetzt, so daß die Flüssigkeit aus den Löchern heraus überquillt und während des Erhärtens zu einer die jeweilige Reihe von hintereinanderliegenden Löchern überdeckenden Leiste geformt wird (s. Figur 1).

Gemäß einer weiteren Ausführungsform der Erfindung wird der schwer brennbare Hüllkörper nicht mehr mit Löchern, sondern mit einem in Längsrichtung verlaufenden Schlitz (Spalt) versehen, so daß beim Einfüllen der brennbaren Masse der Überschuß aus dem Schlitz herausquillt und während des Erstarrungsvorgangs zu einer den Schlitz überdeckenden Leiste bzw. Längswulst geformt wird.

Die schwer entflammbare Hülse kann zweckmäßig etwa aus Pappe, Glasfasergewebe, Karton, Natronkraftpapier, schwer entflammbarem Kunststoff und/oder schlecht entzündlichen Verbundfolien hergestellt werden, wobei auch eine Aluminiumzwischenschicht vorgesehen werden kann, um die Brennbarkeit der Hülse noch weiter herabzusetzen.

Als geeignete Füllunger haben sich die mit einem Härter versehenen üblichen Kohlenanzünder-Emulsionen (sog. "weiße Kohlenanzünder", s. DE-PS 15 04 012) erwiesen. Derartige Emulsionen können ggf. auch mit Holzmehl, Sägespänen o.ä. angereichert werden. Weiterhin haben sich Mischungen aus Holzabfällen (Holzschrot, -mehl, -späne) und Paraffinen bzw. Wachsen (etwa im Verhältnis 2 : 1 bis 1 : 2) und/oder Mischungen aus Holzabfällen (vorzugsweise Holzmehl) und Abfallparaffinen bzw. Nebenprodukten der Stearinsäure-Herstellung (Destillations-Rückstände) als brauchbar erwiesen.

Die Gestalt des Hüllkörpers kann (wie in den beigefügten Figuren 1 und 2 gezeigt) walzenförmig, aber auch rechteckig oder prismenförmig bzw. unregelmäßig (z.B. einem natürlichen Holzscheit nachgestellt) sein.

Die rach dem erfirdurgsgemäßer Verfahrer hergestellter Kaminholz-Ersatzprodukte haben prinzipiell der Vorteil vielfacher Gestaltungsmöglichkeiten, von der üblicher Rollen (Walzen)-Form über scheitartige Dreikantformer bis zu aus (schwer brennbaren) Kunststoffen geblasenen bzw. gepreßten knorrigen Astformen. Sie könner daher nicht nur als Ersatz, sondern sogar als vollendete Imitation von Kaminholz angesehen werden, zumal da durch die gezügelte und vom Hüllmaterial gebremste Verbrennung (zunächst nur an den Löchern und erst später auf den ganzer Hüllkörper übergreiferd) ein Flammbild erzeugt werden kann, das dem vor verbrennendem Holz sehr ähnlich ist. Wegen der schwer entflammbarer Hülle behalten sie auch nach Entzünden des Inhalts noch längere zeit ihre Form.

Die fertigen Produkte werden zweckmäßig (um Brennstoff-Verluste zu verhindern) in Kunststoff-Folie (z.B. Zellglasfolie) eingesiegelt. Beim Einsatz können sie daraus herausgenommen, an der Anzündleiste entzündet und mit der Leiste nach oben in den Kamin gelegt werden. Abhängig von der Zahl der Löcher bzw. Breite des Schlitzes sowie der Menge an Brennstoff kann die Brenndauer eines "Scheits" bis zu 3 Stunden betragen.

Die Produkte gemäß der Erfindung können selbstverständlich auch Schauzwecken dienen. Es ist ferner möglich, sie zur Lichterzeugung, z.B. als Not- oder Warnlicht zu verwenden; hierzu ist es aber ratsam, die Anzahl der Löcher in der Hülle wesentlich zu reduzieren, ggf. sogar nur eine Öffnung vorzusehen.

Die folgenden Ausführungsbeispiele erläutern die Erfindung, ohne sie zu beschränken:

## Beispiel 1

Hartpapphülse, ca. 50 mm Außenduchmesser, Wandstärke 2 mm, Länge 250 mm, versehen mit 4 gegenüberliegenden Reihen von je Löchern mit 10 mm Durchmesser. Nach Ummanteln der Hülse wurde sie mit Kohlenanzünder-Emulsion (Basis Petroleum, Emulgator, Harnstoff-Formaldehyd-Harz, Härter) gefüllt. Nach einer Standzeit von ca. 20 Minuten ist die befüllte Hülse (Gewicht ca. 300 g) verpackbar bzw. verwendbar. Die Brenndauer beträgt etwa 60 bis 90 Minuten.

## Beispiel 2

Dreikantformkörper aus schlagfestem Polystyrol. Länge 300 mm, Seitenlänge des Querschnittdreiecks 60 mm, je Seite 5 gegeneinander versetzte Löcher von 16 mm (nachträglich anzubringen), befüllt mit einem Gemisch aus Weichholzmehl (ca. 40 %) und (Abfall-) Paraffinen (ca. 60 %), das in die Hülse eingepreßt oder durch Eingießen des verflüssigten Paraffingemisches auf das vorher eindosierte Holzmehl erhalten werden kann. Brenndauer ca. 70 Minuten.

## Beispiel 3

Hülsenrohr aus Aluminium (-verbund)-Folie in etwa den in Beispiel 1 aufgeführten Dimensionen, z.B. mit 3 Reihen zu je 4 Löchern mit ca. 12 mm Durchmesser. Als Füllung wurde eine Mischung aus der mit Härter versetzten Kohlenanzünderemulsion und einem Zusatz von 30 Gew.-% Holzmehl benutzt. Objekte dieser Ausführung brennen relativ langsam ab und hinterlassen mehr Glut als bei Verwenden der Kohlenanzünder-Emulsion allein. Brenndauer etwa 70 Minuten.

## Beispiel 4

Unregelmäßiger, geblasener Hohlkörper aus schlagfestem Polystyrol mit versetzt angeordneten "Düsenlöchern", befüllt mit einem Gemisch aus ca. 50 Gew.-% Holzmehl, 45 Gew.-% Stearinsäure (oder stearinähnlichen Nebenprodukten) und 5 Gew.-% Kaliumnitrat als Verbrennungsförderer. Das Gemisch muß anschließend in die Hülle eingepreßt werden. - Brenndauer etwa 55 Minuten.

## Beispiel 5

a) Hüllkörper
Zylindrischer, geschlitzter Hohlkörper aus verleimter Pappe bzw. verleimtem Papier analog den Hohlkernen/Hülsen von Haushaltskrepp-Rollen. Länge 25-35 cm, lichte Weite ca. 3-5 cm, Wandstärke 1-2 mm. Auch der Einsatz von Wellpappe ist möglich.

b) Füllung
Übliche Masse zur Herstellung von Grillanzünder (Basis: rußarm verbrennendes Petroleum, Emulgator, Harnstoff-Formaldehyd-Harz, Härter).

c) Herstellung
Die unter a) beschriebene Hülse wird senkrecht in eine passende Form gestellt, welche das Füllen und das gleichzeitige Ausformen der Zündleiste (Anzündwulst) ermöglicht. Die gefüllte Hülse kann durch Aufklappen bzw. Ausstoßen aus der Form entnommen werden, nachdem die Füllung ausgehärtet ist (20-30 Minuten). Anschließend wird das fertige Produkt in eine Zellglasfolie eingesiegelt.

## Patentansprüche

1) Verfahren zur Herstellung eines Kaminholz-Ersatzproduktes bestehend aus einem schwer brennbaren Hüllkörper (Hülse), welche eine brennbare Füllung umschließt, wobei der Hüllkörper als Zündstellen vorgefertigte Unterbrechungen aufweist, dadurch gekennzeichnet, daß man in die Hülle einen geringen Überschuß an flüssigem bzw. pastösem brennbarem Material einfüllt und die aus den Löchern herausquellende Masse zu einer oder mehreren die löcher überdeckenden Leiste ausformt.

2) Verfahren nach Anspruch 1, dadurch gekennzeichnet, daß man den Hüllkörper in Längsrichtung aufschlitzt, mit einem geringen Überschuß an flüssigem oder pastösem brennbarem Material befüllt und die herausquellende Masse zu einer den Schlitz überdeckenden Leiste ausformt.

3) Verfahren nach Anspruch 1 oder 2, dadurch gekennzeichnet, daß als Hülsenmaterial Pappe, Natronkraftpapier, schlecht entzündliche Kunststoff-Folien oder Glasfasergewebe verwendet werden.

4) Verfahren nach Anspruch 3, dadurch gekennzeichnet, daß als Hülsenmaterial schlecht entzündliche Verbundfolien mit einer Aluminium-Zwischenschicht verwendet werden.

5) Verfahren nach einem oder mehreren der Ansprüche 1 bis 4, dadurch gekennzeichnet, daß als brennbare Füllung eine mit einem Härter versehene Kohlenanzünder-Emulsion verwendet wird.

6) Verfahren nach Anspruch 5, dadurch gekennzeichnet, daß die Emulsion mit Holzabfällen angereichert ist.

7) Verfahren nach einem oder mehreren der Ansprüche 1 bis 4, dadurch gekennzeichnet, daß als brennbare Füllung Gemische von Holzabfällen mit Paraffinen, Wachsen und/ oder Stearinsäure bzw. Nebenprodukten der Stearinsäureherstellung verwendet werden.

## Claims

1. Process for producing a firewood substitute product consisting of a casing member (shell) of limited combustibility which encloses a combustible filling, the casing member containing prefabricated openings provided as ignition points, characterised in that a slight excess of combustible material in liquid or paste form is introduced into the shell and the mass squeezing out of the holes is formed into one or more strips covering the holes.

2. Process as claimed in claim 1, characterised in that the casing member is slit open in the longitudinal direction, filled with a slight excess of combustible material in liquid or paste form and the mass squeezing out is formed into a strip which covers the slit.

3. Process as claimed in claim 1 or 2, characterised in that cardboard, soda kraft paper, plastics films which are difficult to ignite or woven glass fibres are used as the casing material.

4. Process as claimed in claim 3, characterised in that composite films with an intermediate layer of aluminium and which are difficult to ignite are used as the casing material.

5. Process as claimed in one or more of claims 1 to 4, characterised in that a firelighter emulsion containing a hardener is used as the combustible filling.

6. Process as claimed in claim 5, characterised in that the emulsion is enriched with wood chippings.

7. Process as claimed in one or more of claims 1 to 4, characterised in that mixtures of wood chippings with paraffin, waxes and/or stearic acid or by-products of the manufacture of stearic acid are used as the combustible filling.

## Revendications

1. Procédé pour la préparation d'une bûche synthétique consistant en un corps d'enveloppe (douille) difficilement combustible, lequel renferme une matière de charge combustible, le corps d'enveloppe présentant en tant que points d'allumage des discontinuités préformées, caractérisé en ce que l'on introduit dans l'enveloppe une quantité de matière combustible liquide ou pâteuse en léger excédent et en ce que la masse qui déborde des trous se transforme en une ou plusieurs bandes recouvrant les trous.

2. Procédé selon la revendication 1, caractérisé en ce qu'on pratique une fente longitudinalement dans le corps d'enveloppe que l'on remplit d'une quantité de matière combustible liquide ou pâteuse en léger excédent et en ce que la masse débordant se transforme en une bande recouvrant la fente.

3. Procédé selon la revendication 1 ou 2, caractérisé en ce qu'en tant que matière de douille, on utilise du carton, du papier kraft à soude, des feuilles de matière synthétique prenant difficilement feu ou du tissu de fibres de verre.

4. Procédé selon la revendication 3, caractérisé en ce qu'en tant que matière de douille on utilise des feuilles composées prenant difficilement feu comportant une couche intermédiaire d'aluminium.

5. Procédé selon l'une ou plusieurs des revendications 1 à 4, caractérisé en ce qu'en tant que matière de remplissage combustible, on utilise une émulsion d'allume-feu munie d'un durcisseur.

6. Procédé selon la revendication 5, caractérisé en ce que l'on enrichit l'émulsion avec des déchets de bois.

7. Procédé selon l'une ou plusieurs des revendications 1 a 4, caractérisé en ce qu'en tant que matière de remplissage combustible, on utilise des mélanges de déchets de bois avec des paraffines, des cires et/ou de l'acide stéarique ou des sous-produits de la préparation de l'acide stéarique.

Figur 1

Figur 2